# EUROPEAN PATENT SPECIFICATION

(11) **EP 0 787 378 B1**
(45) Date of publication and mention of the grant of the patent: **08.07.1998**
(21) Application number: 95934216.3
(22) Date of filing: 17.10.1995
(51) Int. Cl.: H02G 3/04, A47B 21/00

(54) **CABLE CARRIERS**
KABELTRÄGER
PORTE-CABLES

(30) Priority: 18.10.1994 GB 9420974; 31.05.1995 GB 9510941
(43) Date of publication of application: 06.08.1997
(73) Proprietor: PRESIDENT OFFICE FURNITURE LIMITED, Dunstable, Bedfordshire LU5 5UL (GB)
(72) Inventor: CARR, Roger, John, Croydon Surrey CR0 7RX (GB)
(74) Representative: Tribe, Thomas Geoffrey
(86) International application number: PCT/GB95/02445
(87) International publication number: WO 96/12331

(56) References cited:
- EP-A- 0 260 740
- DE-C- 4 303 955
- GB-A- 2 233 163

## Description

The present invention relates to cable carriers, particularly flexible cable carriers for use between furniture units used in offices where computer equipment, telephones and other electrical machinery have to be supplied with power and data via such cabling.

When supplying cabling from one free standing piece of furniture to another, say from a desk unit to a computer stand, it is desirable that the cabling is kept tidily out of harms way, is protected from damage and does not become tangled or unsightly.

European patent application EP-A-0 260 740 discloses a flexible cable guide for use with office furniture, comprising a plurality of shaped elememts of H-section, the legs of the H being curved inward to form cylindrical spaces into which power and communications cables can be slotted. Adjacent elements are connected by joints allowing pivoting in two orthogonal directions and each element is traversed by an axial hole, through which a central guide cable can be passed.

British patent application GB-A-2 233 163 also discloses a flexible cable guide for use with office furniture, comprising a plurality of elements, each consisting of a group of parallel ribs of C-shaped profile forming, with a T-shaped core which emerges from the upright arm of the C, a pair of channels into which cables can be slotted. The core has a pin projecting in the axial direction of the guide on one side and a corresponding hole on the other side. In addition, each core has an axial through hole. The pin on one element is inserted into the hole of the adjacent element to provide alignment and articulation of the elements. A cable is threaded through the axial holes to keep the elements in contact while allowing them to pivot about the pins.

These known cable guides employ a rather complex structure to achieve flexure.

Accordingly the present invention provides a flexible cable carrier for connection of cabling between furniture, comprising a continuous, flexible carrier hose; a plurality of spaced, sequential, sleeve units carried by said hose, for enabling the cabling to be protectively carried, each sleeve unit having a central region within which said carrier hose is located, and outer cavities having slotted regions within which the cabling is located, said slotted regions of adjacent ones of said sleeve units being substantially in alignment, and at least one clip means for clipping an end of the cable carrier to a furniture unit.

Conveniently the clip can be a ball joint which provides a link to the furniture unit. This allows the carrier to be mechanically sound while avoiding mechanical tension on the cabling.

Each sleeve may be formed with a central region being of circular cross-section to accommodate the continuous flexible hose and which carries an outer casing of a substantially elliptical cross-section joined to the central region by radial webs. The space between the outer casing and the central region can then define the cavities to receive the cabling.

As well as being preferably of substantially elliptical cross-section in its outer casing, the sleeve should preferably have rounded ends to permit flexible articulation of the cable carrier.

An embodiment of the invention will now be described by way of example of reference to the accompanying diagrammatic drawings in which:
Figure 1 shows schematically a pedestal supply unit and a table with a cable carrier there between.
Figure 2 shows a perspective view of part of the cable carrier.
Figure 3 shows a plan view of an end fitting of the cable carrier.
Figure 4 shows a section on the figure 3 view and;
Figure 5 shows an enlarged fragment of the figure 4 view.
Figure 6 is a side elevation of a work table incorporating cable carriers;

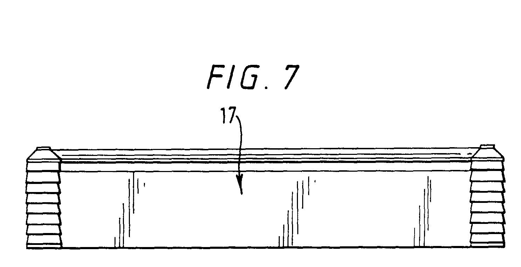

Figure 7 is a side sectional elevation of a floor level unit;
Figure 8 is a side elevation of the table of Figure 6;
Figure 9 is a view of a cable carrier carried below a work top; and
Figure 10 is an enlarged detail of a connector.

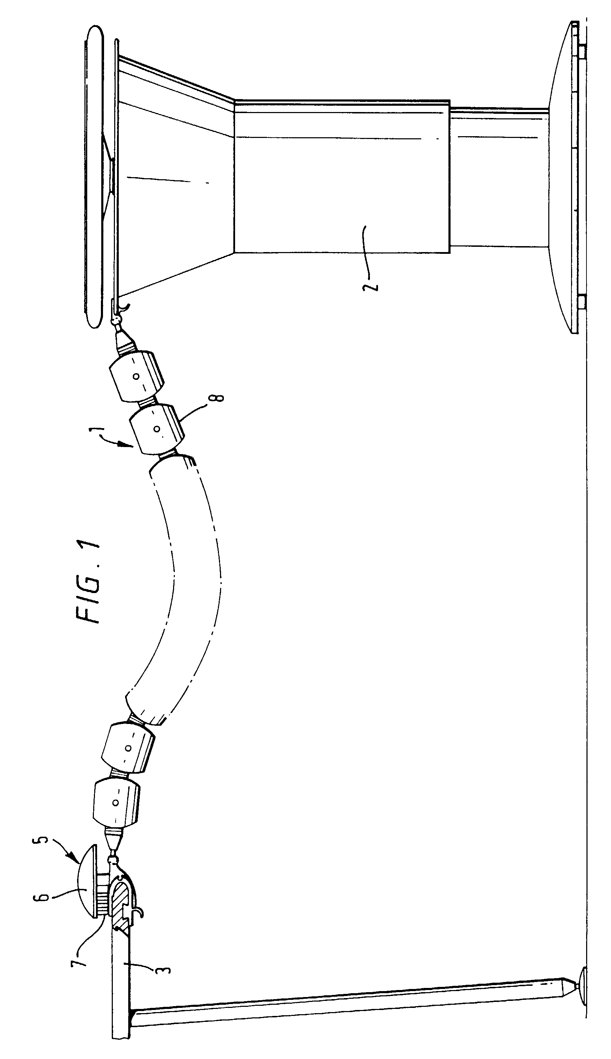

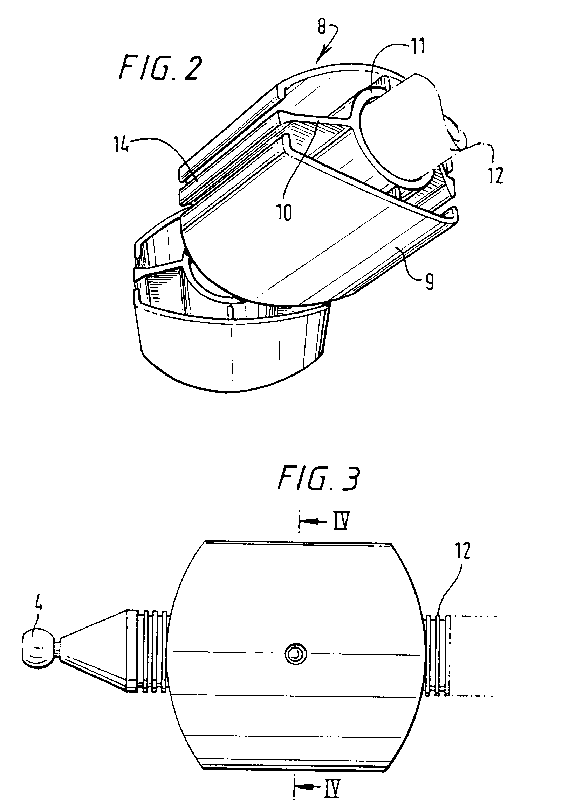

Referring to Figure 1, a flexible carrier 1 in accordance with the invention provides a link between a pedestal, a free standing pedestal unit 2 and a table 3. Referring to figure 3, the cable carrier terminates in ball joint ends 4, one of which slots into an upper rim of a pedestal unit 2, while the other end slots into a clamping unit 5 clamped to the table 3.

The clamping unit 5 is clamped to the table edge and includes a cover 6 and multiple posts 7 which allow wiring to be held in position before being fed to equipment on the table 3.

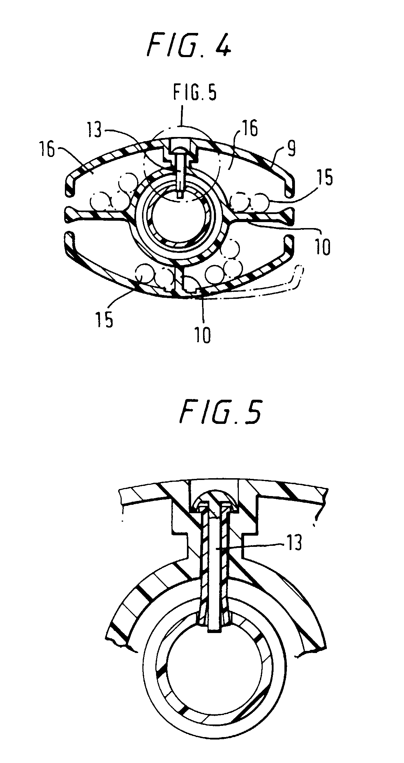

Referring to figure 2, the cable carrier 1 comprises a plurality of sleeve units 8 of a moulded plastics material each of which has an outer casing 9 of substantially elliptical cross-section (see figure 4) which is connected via radial webs 10 to an inner circular section 11 which houses a central support hose 12 which is a plastics moulding of pleated shape (see figure 3) to provide a flexible but firm support for the carrier. Each sleeve unit 8 is attached to the centra hose 12 by means of a single rivet 13 (see figures 4 and 5). In an alternative form a ribbed stud of plastics material is used which can be snapped into position.

Referring to Figures 2 and 4, the outer casing 9 includes slots 14 which, due to the inherent resilience of the plastics material of which the sleeve units are formed, enables wiring 15 to be readily received within the cavities 16 defined between the outer wall 9 and the inner circular wall 11.

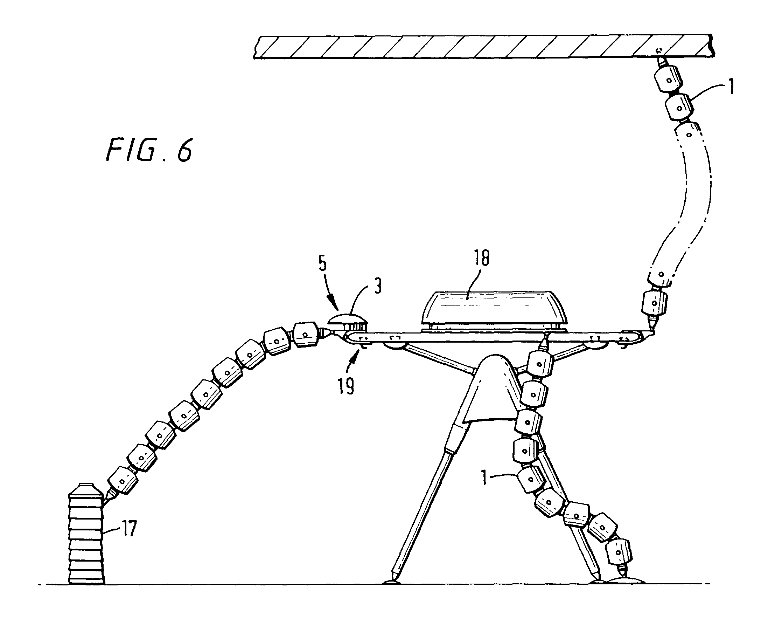

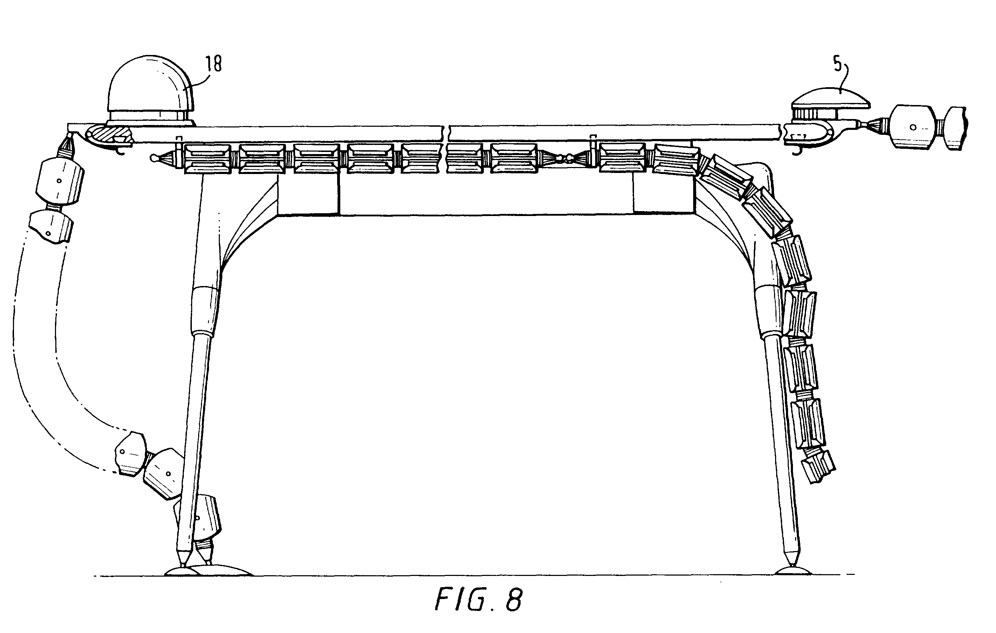

Figures 6 and 8 show a table with several cable carriers attached. The cable carriers are connected to the edge of the table top in a number of different ways. In each case a snap fitment within a rebate channel under the edge of the table top provides a female ball receptor for reception of a ball at the end of the cable carrier. This includes a finger hook 19 protruding downwards to enable the snap fitment to be removed.

Connections of the cable carrier to the following are shown:
a) to the ceiling
b) to a floor mounted spine unit 17 which can carry a length of cable carrier while providing access for wiring via removable side panels
c) to a domed edge unit 5 which controls the wiring as it is fed to units on the table
d) to a high domed plug cover 18. Within the domed plug cover 18 are a series of mains sockets to provide power for units on the table.
e) to a simple floor unit for access below the floorboards.

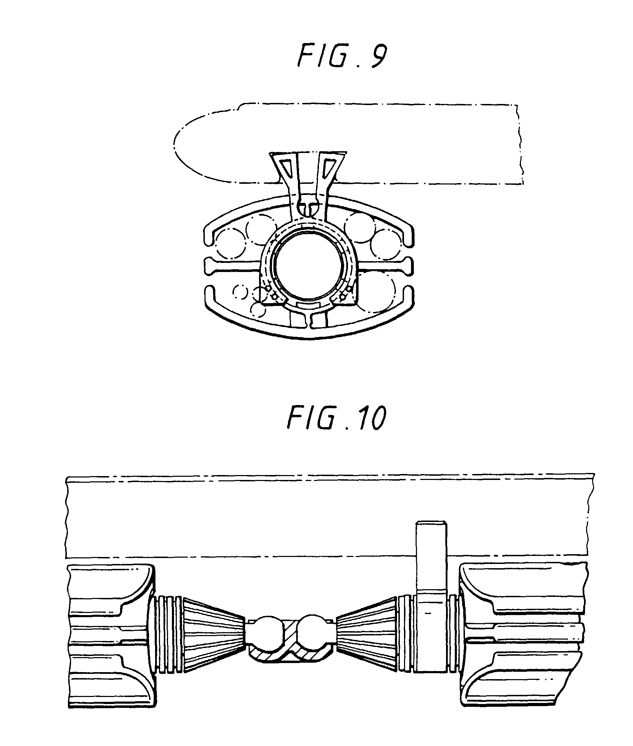

Figure 9 shows how the cable carrier is carried below a work top.

Figure 10 shows in detail the way two ends of two cable carriers are connected together. A plastics moulding including two ball receptors simply enables two cable carrier ball ends to be snapped together.

## Claims

1. A flexible cable carrier (1) for connection of cabling between furniture, comprising a continuous, flexible carrier hose (12); a plurality of spaced, sequential, sleeve units (8) carried by said hose, for enabling the cabling (15) to be protectively carried, each sleeve unit having a central region (11) within which said carrier hose (12) is located, and outer cavities (16) having slotted regions (14) within which the cabling is located, said slotted regions of adjacent ones of said sleeve units being substantially in alignment, and at least one clip means (4, 5) for clipping an end of the cable carrier to a furniture unit (3).

2. A flexible cable carrier according to Claim 1 in which said clip means includes a ball joint (4) which provides a connection link to the furniture unit (3).

3. A flexible cable carrier according to Claim 1 in which each sleeve (8) is formed with the central region (11) being of substantially circular cross-section to accommodate the continous flexible hose (12) and the outer casing (9) accommodating said outer cavities (16) and being of a substantially elliptical cross-section joined to the central region by radial webs (10), and each sleeve (8) having rounded ends to permit flexible articulation of the cable carrier.

4. A flexible cable carrier according to Claim 2 in which at each end of said cable carrier, there is a ball to act as part of said ball joint (4) for the connection link to the furniture unit (3).

5. A flexible cable carrier according to Claim 4 comprising at least two lengths of spaced and sequentially connected sleeve units each with a ball at each end, and a female coupling unit linking said lengths together via adjacent balls.

6. A plurality of furniture units (2, 3) with table tops at least some of which are linked by means of a cable carrier according to Claim 1 comprising snap fitments (5) attached to edge regions of said table tops via a rebate channel beneath each said table top, each said snap fitment (5) connecting to an end of said cable carrier via a ball joint connection (4).

## Patentansprüche

1. Flexibler Kabelträger (1) zum Verbinden von Kabelleitungen zwischen Möbeln, umfassend einen durchgehenden, flexiblen Trägerschlauch (12); eine Vielzahl beabstandeter, aufeinanderfolgender Hülseneinheiten (8), die von dem Schlauch getragen werden, damit die Kabelleitungen (15) geschützt getragen werden können, wobei jede Hülseneinheit einen Zentralraum (11) zur Unterbringung des Trägerschlauches (12) und äußere Kammern (16) mit geschlitzten Bereichen (14) zur Unterbringung der Kabelleitungen hat, wobei die geschlitzten Bereiche benachbarter Hülseneinheiten im wesentlichen aufeinander ausgerichtet sind, und wenigstens eine Klemmvorrichtung (4, 5) zum Befestigen eines Endes des Kabelträgers an einer Möbeleinheit (3).

2. Flexibler Kabelträger nach Anspruch 1, wobei die Klemmvorrichtung ein Kugelgelenk (4) umfaßt, das ein Verbindungsgelenk zur Möbeleinheit (3) ist.

3. Flexibler Kabelträger nach Anspruch 1, wobei jede Hülse (8) so ausgebildet ist, daß der Zentralraum (11) einen im wesentlichen kreisförmigen Querschnitt zur Aufnahme des durchgehenden flexiblen Schlauches (12) hat und daß das äußere Gehäuse (9) die äußeren Kammern enthält und einen im wesentlichen elliptischen Querschnitt hat, der durch radiale Stege (10) mit dem Zentralraum verbunden ist, wobei jede Hülse (8) abgerundete Enden hat, um eine flexible Gelenkbewegung des Kabelträgers zu ermöglichen.

4. Flexibler Kabelträger nach Anspruch 2, wobei an jedem Ende des Kabelträgers eine Kugel als Teil des Kugelgelenks (4) als Verbindungsgelenk zur Möbeleinheit (3) vorhanden ist.

5. Flexibler Kabelträger nach Anspruch 4, mit wenigstens zwei Abschnitten aus beabstandeten und aufeinanderfolgend verbundenen Hülseneinheiten, die jeweils an jedem Ende eine Kugel haben, und eine Einsteckkupplungseinheit, die die Abschnitte über benachbarte Kugeln miteinander verbindet.

6. Vielzahl von Möbeleinheiten (2, 3) mit Tischplatten, von denen wenigstens einige durch einen Kabelträger nach Anspruch 1 verbunden sind, mit Schnappanschlüssen (5), die in den Kantenbereichen der Tischplatten über eine unterhalb jeder Tischplatte befindliche Falznut angebracht sind, wobei jeder Schnappanschluß (5) über eine Kugelgelenkverbindung (4) mit einem Ende des Kabelträgers verbunden ist.

## Revendications

1. Support de câble souple (1) pour la connexion de câblages entre des meubles, comprenant un flexible de support. souple continu (12), une pluralité d'unités formant manchons séquentielles espacées (8) portées par ledit flexible, destinées à permettre au câblage (15) d'être supporté de manière protégée, chaque unité formant manchon présentant une région centrale (11) à l'intérieur de laquelle ledit flexible de support (12) est placé, des cavités extérieures (16) comprenant des régions pourvues de fentes (14) à l'intérieur desquelles le câblage est placé, lesdites régions pourvues de fentes de chacune desdites unités formant manchon adjacentes étant sensiblement alignées, et au moins un moyen d'agrafage (4, 5) pour agrafer une extrémité du support de câble sur une unité de meuble (3).

2. Support de câble souple selon la revendication 1, dans lequel lesdits moyens formant agrafe comprennent un joint à rotule (4) qui réalise un élément articulé de raccordement à l'unité de meuble (3).

3. Support de câble souple selon la revendication 1, dans lequel chaque manchon (8) est réalisé avec sa région centrale (11) ayant une section transversale sensiblement circulaire pour loger le flexible souple continu (12) et l'enveloppe extérieure (9) recevant lesdites cavités extérieures (16) et ayant une section transversale sensiblement elliptique, reliée à la région centrale par des nervures radiales (10), et chaque manchon (8) ayant des extrémités arrondies pour permettre une articulation souple du support de câble.

4. Support de câble souple selon la revendication 2, dans lequel, au niveau de chaque extrémité dudit support de câble, se trouve une rotule constituant une partie dudit joint à rotule (4) destiné à constituer l'élément articulé de raccordement à l'unité de meuble (3).

5. Support de câble souple selon la revendication 4, comprenant au moins deux longueurs d'unités formant manchons espacées et reliées de manière séquentielle, comportant chacune une rotule à chaque extrémité, et une unité d'accouplement femelle reliant lesdites longueurs ensemble par l'intermédiaire de rotules adjacentes.

6. Pluralité d'éléments de meuble (2, 3) munis de plateaux de table, au moins certains d'entre eux étant reliés par l'intermédiaire d'un support de câble selon la revendication 1, comprenant des montures à encliquetage (5) fixées sur des régions de bord desdits plateaux de table par l'intermédiaire d'un canal formant feuillure sous chacun desdits plateaux de table, chaque dite monture à encliquetage (5) se raccordant à une extrémité dudit support de câble par l'intermédiaire d'une connexion à joint à rotule (4).
